# EUROPÄISCHE PATENTANMELDUNG

(11) **EP 2 600 030 A2**
(43) Veröffentlichungstag der Anmeldung: **05.06.2013**
(21) Anmeldenummer: 12007802.7
(22) Anmeldetag: 19.11.2012
(51) Int. Cl.: F16F 15/134, F16F 15/14

(54) **Drehmomentwandler**

(30) Priorität: 01.12.2011 DE 102011087505
(71) Anmelder: Schaeffler Technologies AG & Co. KG, 91074 Herzogenaurach (DE)
(72) Erfinder: Dinger, Christian, 77886 Lauf (DE); Degler, Mario, 76534 Baden-Baden (DE); Kombowski, Eugen, 76316 Malsch (DE)

(57) **Zusammenfassung**

Ein Drehmomentwandler zur Übertragung von Drehmoment zwischen einer Eingangsseite und einer Ausgangsseite umfasst ein Zwei-Massen-Schwungrad mit einer ersten drehbaren Schwungmasse, die mittels eines Energiespeichersystems mit einer zweiten drehbaren Schwungmasse verbunden ist, ein mit der Ausgangsseite verbundenes weiteres Energiespeichersystem, ferner eine Turbinenanordnung und eine Kupplungseinheit, die zueinander parallel geschaltet sind, und ein Fliehkraftpendel zur Tilgung von Torsionsschwingungen.

## Beschreibung

Die Erfindung betrifft einen Drehmomentwandler. Insbesondere betrifft die Erfindung einen Drehmomentwandler mit einem Zwei-Massen-Schwungrad.

Zum Übertragen von Drehmoment von einem Antriebsmotor an ein Getriebe in einem Kraftfahrzeug kann ein Drehmomentwandler eingesetzt werden. Der Dr3hmomentwandler umfasst eine Turbine mit einem Pumpenrad und einem Turbinenrad, die wenigstens teilweise von einer Flüssigkeit umspült sind, so dass das sich drehende Pumpenrad das Turbinenrad antreibt. Zur Minimierung von Verlusten ist zusätzlich eine Wandlerkupplung vorgesehen, um bei Bedarf die Bewegung des Turbinenrads mechanisch an die des Pumpenrads zu koppeln. Die Drehmomentübertragung erfolgt beispielsweise während eines Anfahrvorgangs des Kraftfahrzeugs durch die hydrodynamische Kopplung mittels der Turbine und während eines normalen Fahrbetriebs durch die mechanische Kopplung mittels der Wandlerkupplung.

Um im Fahrbetrieb Torsionsschwingungen um eine Eingangsseite des Drehmomentwandlers möglichst abzubauen, bevor sie eine Ausgangswelle des Drehmomentwandlers erreichen, sind unterschiedliche Anordnungen am und im Drehmomentwandler bekannt, die ein Fliehkraftpendel und einen Torsionsdämpfer umfassen können.

DE 10 2008 057 648 A1 schlägt vor, ein Rotationselement mit einem Fliehkraftpendel mittels eines ersten Torsionsdämpfers mit der Eingangswelle und mittels eines zweiten Torsionsdämpfers mit der Ausgangswelle zu verbinden. Mit dieser Anordnung sollen Drehungleichförmigkeiten in der Kraftübertragung zwischen der Eingangswelle und der Ausgangswelle verbessert reduzierbar sein.

DE 10 2009 024 743 A1 schlägt vor, das Fliehkraftpendel am Turbinenrad zu befestigen und eine Wandlerüberbrückungskupplung zur Überbrückung der Turbine im Lastbetrieb vorzusehen. Ein erster Torsionsdämpfer leitet Drehmoment vom Turbinenrad an die Ausgangswelle ein und ein zweiter Torsionsdämpfer leitet Drehmoment von der Wandlerüberbrückungskupplung an die Ausgangswelle ein. Dabei besteht der zweite Torsionsdämpfer aus zwei Torsionsdämpferelementen, die in Serie angeordnet sind. Die Anordnung der Dämpferelemente soll dazu beitragen, einen Bauraumbedarf des beschriebenen Drehmomentwandlers zu minimieren.

Drehmomentwandler der beschriebenen Art stellen grundsätzlich ein Torsionsschwingungssystem dar, das beispielsweise durch Drehungleichmäßigkeiten eines die Antriebswelle antreibenden Motors in eine Torsionsschwingung (Drehschwingung) versetzt werden kann. Zur Verhinderung der Ausbreitung von Drehschwingungen von der Antriebswelle zur Ausgangswelle oder umgekehrt kann ein Zwei-Massen-Schwungrad verwendet werden. Durch das Zwei-Massen-Schwungrad können jedoch neue Schwingungsprobleme in bestimmten Betriebszuständen entstehen. Der Erfindung liegt daher die Aufgabe zu Grunde, einen Drehmomentwandler mit einem Zwei-Massen-Schwungrad anzugeben, der eine verbesserte Isolation von Drehschwingungen zwischen der Eingangs- und der Ausgangswelle realisiert.

Die Erfindung löst dieses Problem mittels eines Drehmomentwandlers mit den Merkmalen von Anspruch 1. Unteransprüche geben bevorzugte Ausführungsformen wider.

Ein Drehmomentwandler zur Übertragung von Drehmoment zwischen einer Eingangsseite und einer Ausgangsseite umfasst ein Zwei-Massen-Schwungrad mit einer ersten drehbaren Schwungmasse, die mittels eines Energiespeichersystems mit einer zweiten drehbaren Schwungmasse verbunden ist, ein mit der Ausgangsseite verbundenes weiteres Energiespeichersystem, ferner eine Turbinenanordnung und eine Kupplungseinheit, die zueinander parallel geschaltet sind, und ein Fliehkrattpendel zur Tilgung von Torsionsschwingungen.

Dadurch kann eine verbesserte Isolierung von Torsionsschwingungen (Drehschwingungen) zwischen der Eingangsseite und der Ausgangsseite realisiert werden.

In einer ersten Variante ist das Zwei-Massen-Schwungrad zwischen der Eingangsseite und der Turbinenanordnung bzw. der Kupplungseinheit angeordnet. In diesem Fall kann das Zwei-Massen-Schwungrad Kraft zwischen der Eingangsseite und der Turbinenanordnung bzw. der Kupplungseinheit übertragen.

In einer zweiten Variante ist das Zwei-Massen-Schwungrad parallel zur Turbinenanordnung bzw. der Kupplungseinheit angeordnet.

Es können ein erstes drehbares Element und ein zweites, dazu koaxial drehbares Element vorgesehen sein, wobei das erste Element dazu eingerichtet ist, Drehmoment zwischen der Eingangsseite und der Ausgangsseite zu übermitteln und das zweite Element mit dem ersten Element elastisch drehbar gekoppelt ist.

Das zweite Element kann beispielsweise einen Teil der Turbinenanordnung umfassen, insbesondere das Turbinenrad, so dass von einem Turbinentilger gesprochen werden kann. Dadurch kann eine ohnehin vorhandene drehbare Masse vorteilhaft zur Dämpfung bzw. Tilgung von Drehschwingungen eingesetzt werden, so dass ein Torsionsschwingungsdämpfer gebildet wird, der insbesondere in einem Betriebszustand wirksam ist, in dem die Kupplungseinheit geschlossen ist und die Turbineneinheit nur ein geringes oder gar kein Drehmoment übermittelt. Dieser Betriebszustand kann einem Normalbetrieb entsprechen, der vorwiegend verwendet wird, so dass auf die Dämpfung bzw. Tilgung in einem anderen, weniger häufig verwendeten oder weniger wichtig erachteten Betriebszustand verzichtet werden kann.

An einem drehbaren Element, das mit einer Drehbewegung der Eingangsseite oder der Ausgangsseite gekoppelt ist, kann ein weiteres Fliehkraftpendel angebracht sein. Durch das weitere Fliehkraftpendel können beispielsweise Torsionsschwingungen, die auf Schwingungen der gleichen Grundfrequenz aber unterschiedlicher Ordnung zurückgehen, gezielt isoliert werden.

Mindestens einer der Energiespeicher kann mehrere um einen Umfang um die Richtung des Drehmoments verteilte Federn umfassen. Man spricht dabei von einer Teilung des Energiespeicher- bzw. Federsystems. Üblich ist eine Teilung in zwei bis vier Federn auf einem Umfang.

Einer oder mehrere Energiespeicher können mehrere Federn umfassen, die so angeordnet sind, dass eine Federkennlinie des Energiespeichers zwei oder mehrere unterschiedliche Abschnitte, umfasst. Die Anordnung kann also über den Federweg abschnittsweise unterschiedliche, insbesondere unterschiedlich steile Federkennlinien aufweisen. Man spricht hierbei von einer zwei- bzw. mehrstufigen Auslegung der Anordnung.

Für eine zweistufige Auslegung werden beispielsweise zwei unterschiedlich harte und unterschiedlich lange Federn parallel betätigt. Die Mehrstufigkeit kann in einer anderen Ausführungsform auch durch nur eine Schraubenfeder realisiert sein, die in einem ersten Abschnitt mit engem Abstand zwischen den Windungen und in einem zweiten Abschnitt mit weitem Abstand zwischen den Windungen gewickelt ist. Wird diese Feder über einen vorbestimmten Weg hinaus komprimiert, liegen die Windungen des eng gewickelten Abschnitts aneinander an und nur noch der zweite Abschnitt der Feder wirkt elastisch.

Torsionsschwingungen, die beispielsweise in unterschiedlichen Betriebszuständen eines die Antriebswelle antreibenden Verbrennungsmotors auftreten, können mittels des mehrstufigen Federsystems verbessert abbaubar sein. Resonanzeffekte des Federsystems können unterdrückt werden.

Einer der Energiespeicher kann eine Anordnung zweier paralleler Federn umfassen. Durch Verwendung von Federn mit unterschiedlichen Federkennlinien können Eigenfrequenzen des Federsystems abgeschwächt werden.

Einer der Energiespeicher kann auch eine Anordnung zweier in Serie angeordneter Federn umfassen. Zwischen den Federn kann eine Schwungmasse angeordnet sein. Feder- und Dämpfungseigenschaften der unterschiedlichen Federn des seriellen Federsystems können gleich oder gezielt ungleich gewählt werden, um die Schwingfähigkeit des Federsystems auf die abzubauenden Torsionsschwingungen abzustimmen.

Die Energiespeicher können an gleichen oder unterschiedlichen Wirkradien bezüglich des Drehmoments liegen. Dadurch kann die Dimensionierung der Federn in Abhängigkeit des Wirkradius erfolgen. Außerdem kann so ein zur Verfügung stehender Bauraum im Drehmomentwandler verbessert nutzbar sein.

In den Ausführungsformen mit Federn kann jede der Federn eine Druckfeder oder eine Bogenfeder sein. Die Bogenfeder folgt im Wesentlichen einer Umfangslinie um die Drehachse, während die Druckfeder im Wesentlichen gerade ist.

Eine Eigenfrequenz des Fliehkraftpendels kann einer Torsionsschwingung einer vorbestimmten Ordnung der Eingangsseite entsprechen. Somit kann das Fliehkraftpendel gezielt an die Grundschwingung oder eine entsprechende Schwingung höherer Ordnung anpassbar sein, die an der Antriebswelle erwartet wird.

Mindestens eines der energiespeichernden Federsysteme kann dazu eingerichtet sein, nicht mehr als um einen vorbestimmten Winkel verdreht zu werden. Die Beschränkung kann beispielsweise durch Auslegung einer Feder, deren Windungen bei einer Kompression, die dem vorbestimmten Winkel entspricht, aneinander aufliegen, hergestellt sein. In anderen Ausführungsformen kann auch beispielsweise ein Anschlag, eine Kulisse oder ein Bolzen dem Zweck der Federwegsbeschränkung dienen.

In einer Ausführungsform kann eines der energiespeichernden Federsysteme mindestens ein Reibelement zur Erzeugung einer vorbestimmten Reibung während des Ein- bzw. Ausfederns umfassen. Die Reibung kann dazu beitragen, ein Dämpfungsverhalten des Federsystems zu verändern. Das Reibelement kann beispielsweise eine Tellerfeder umfassen.

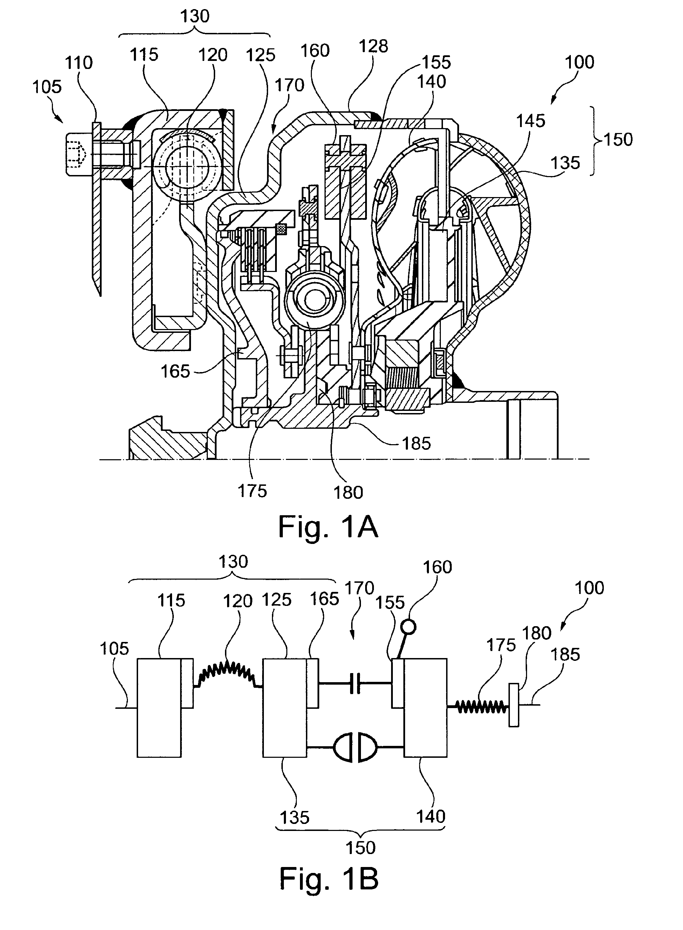

Die Erfindung wird nun mit Bezug auf die beigefügten Figuren genauer beschrieben. In den Figuren 1 bis 7 ist jeweils eine Ausführungsform eines Drehmomentwandlers dargestellt, wobei eine mit dem Buchstaben A versehene Darstellung jeweils einen Längsschnitt durch den Drehmomentwandler und eine mit dem Buchstaben B versehene Darstellung ein funktionales Diagramm des Drehmomentflusses darstellt. Im Folgenden werden die verschiedenen Ausführungsformen jeweils mit Bezug auf beide Darstellungen jeder Figur beschrieben.

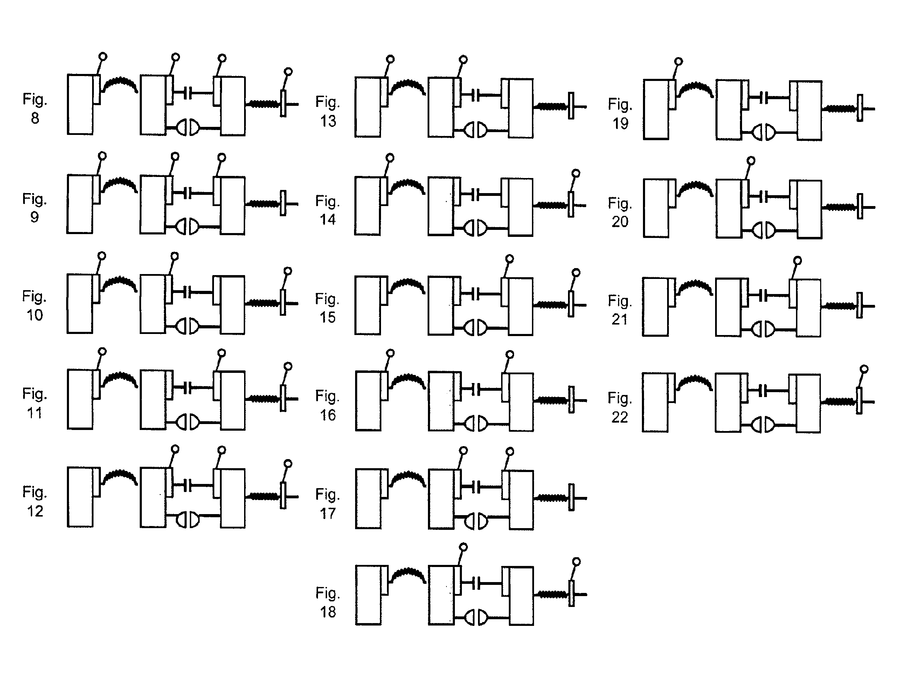

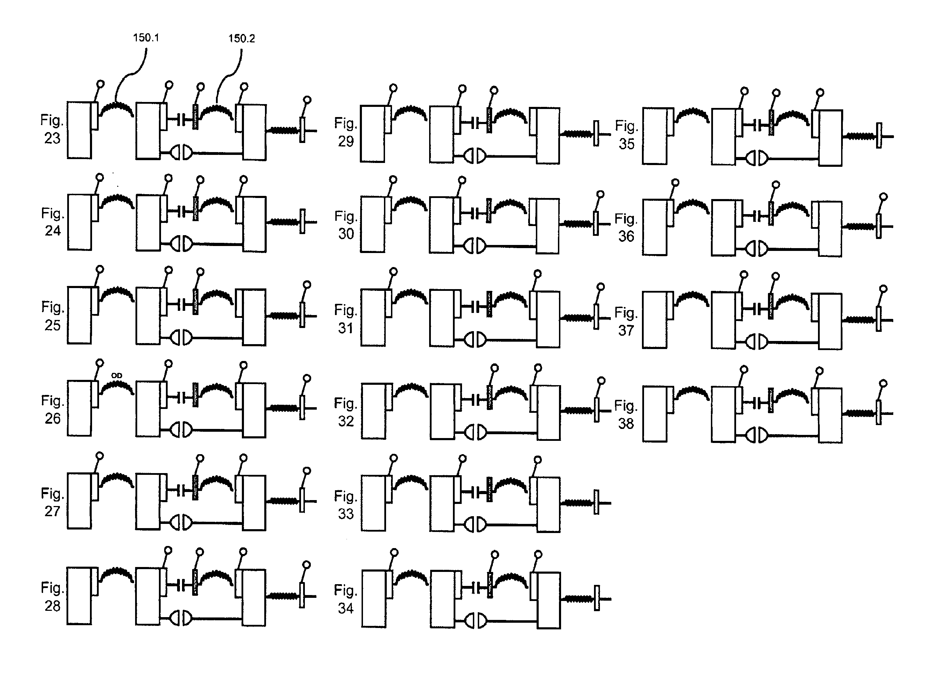

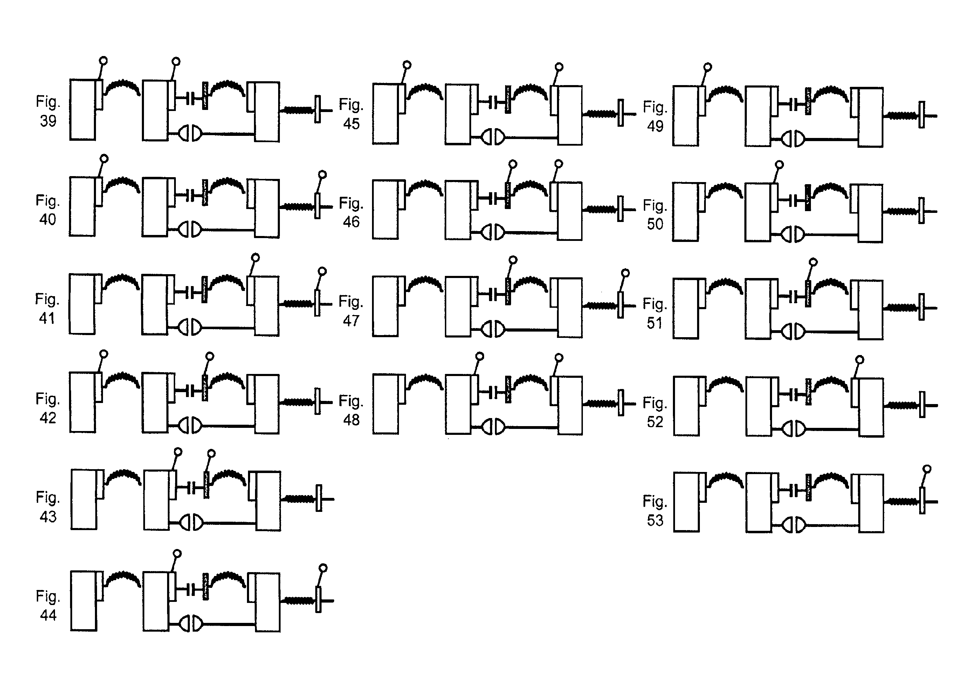

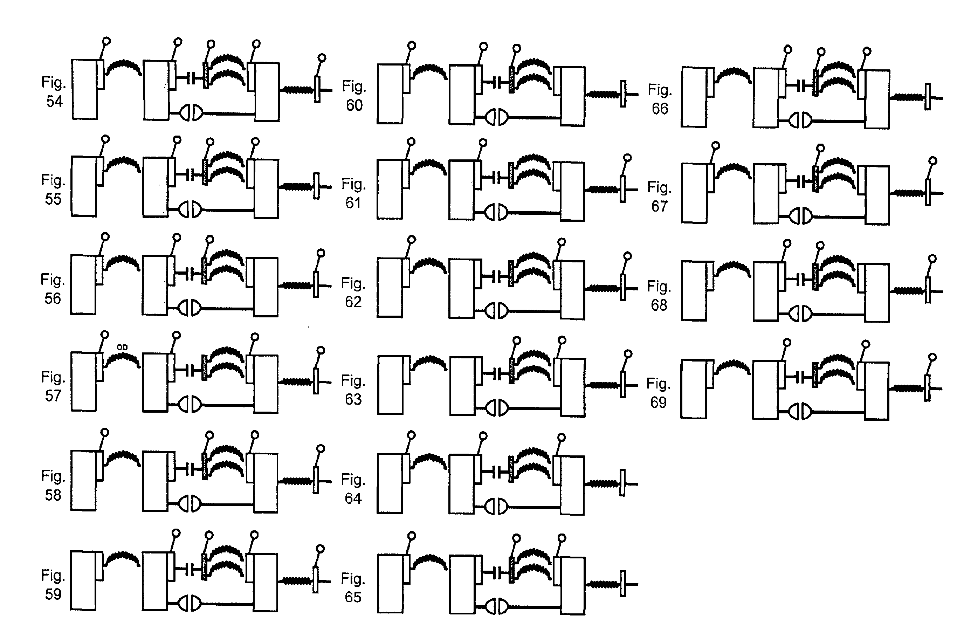

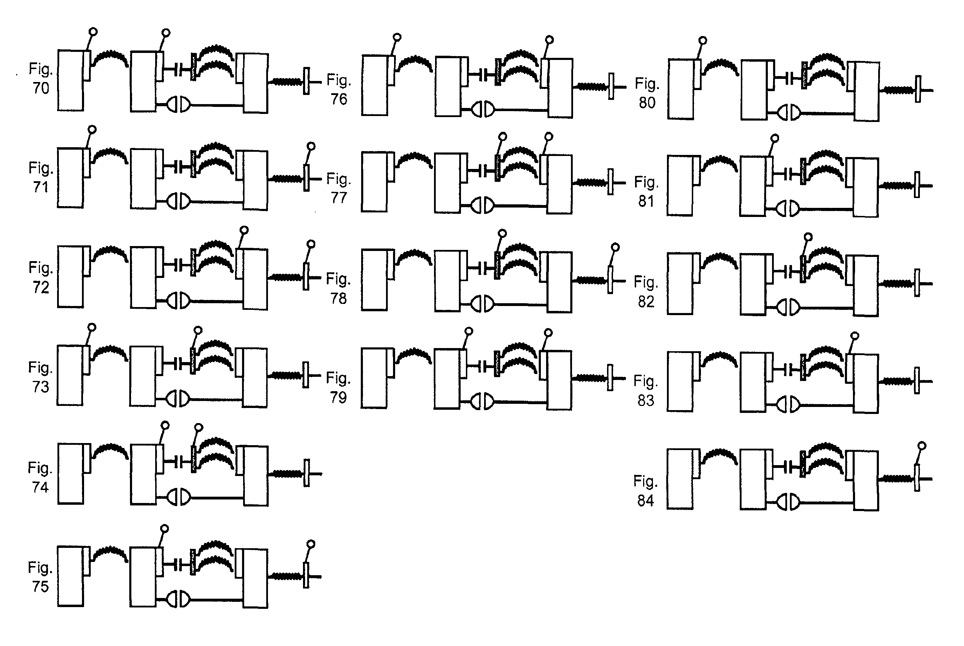

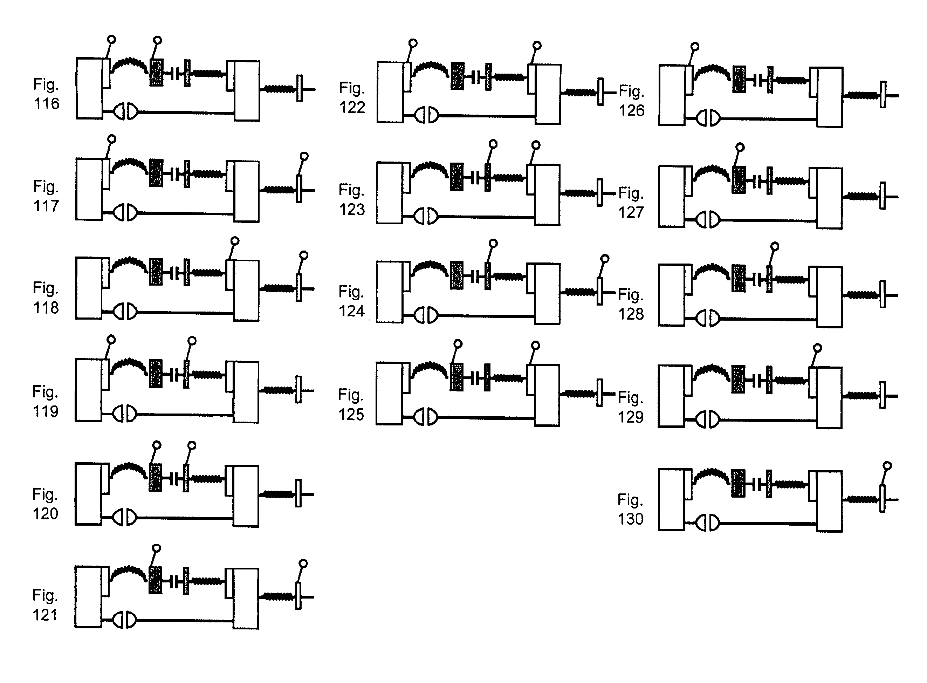

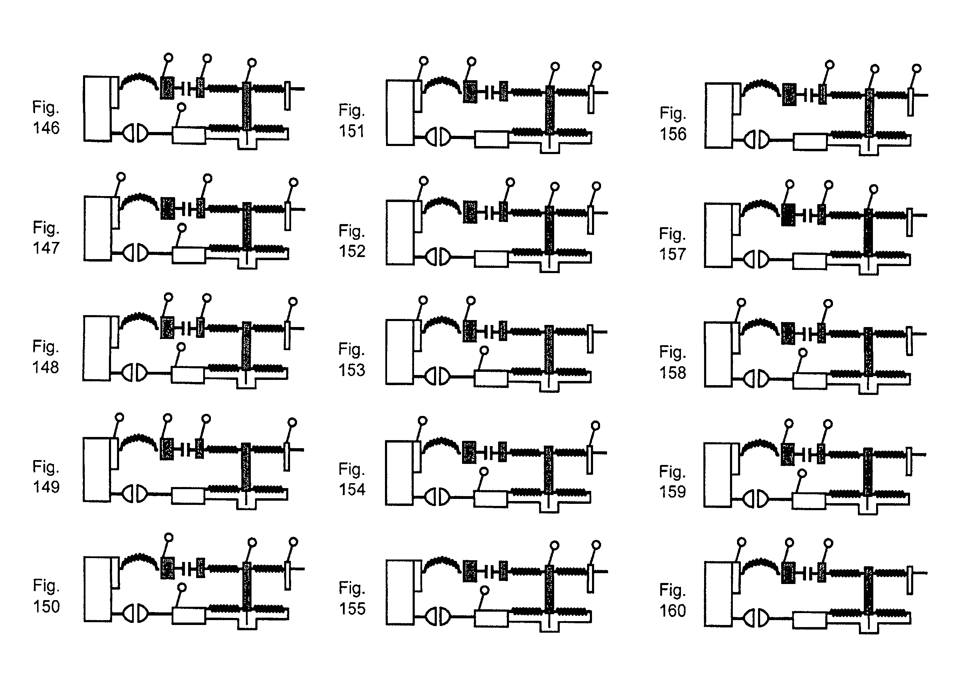

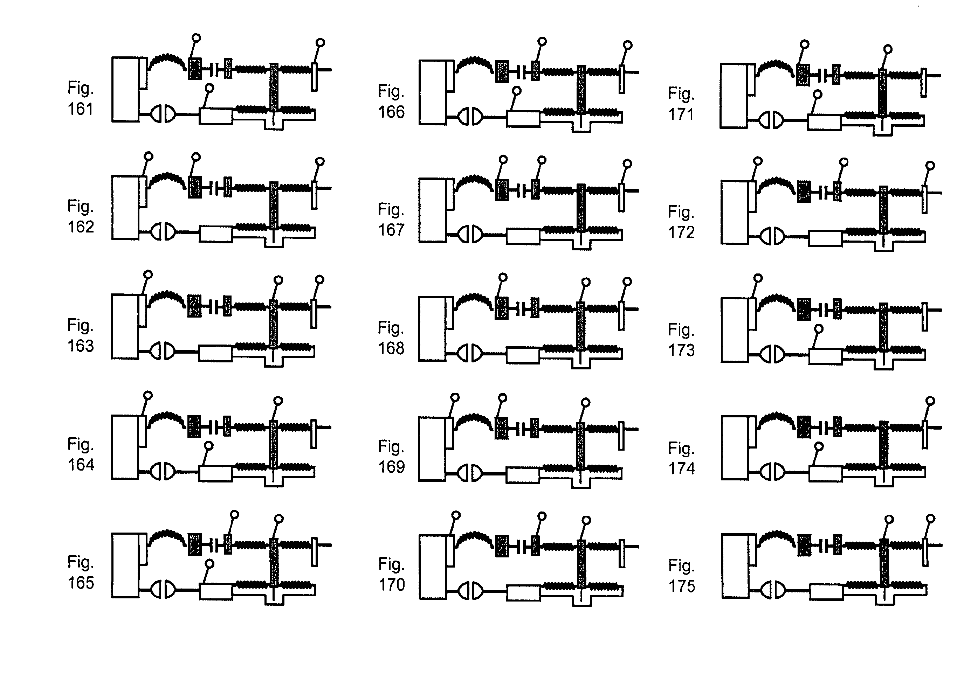

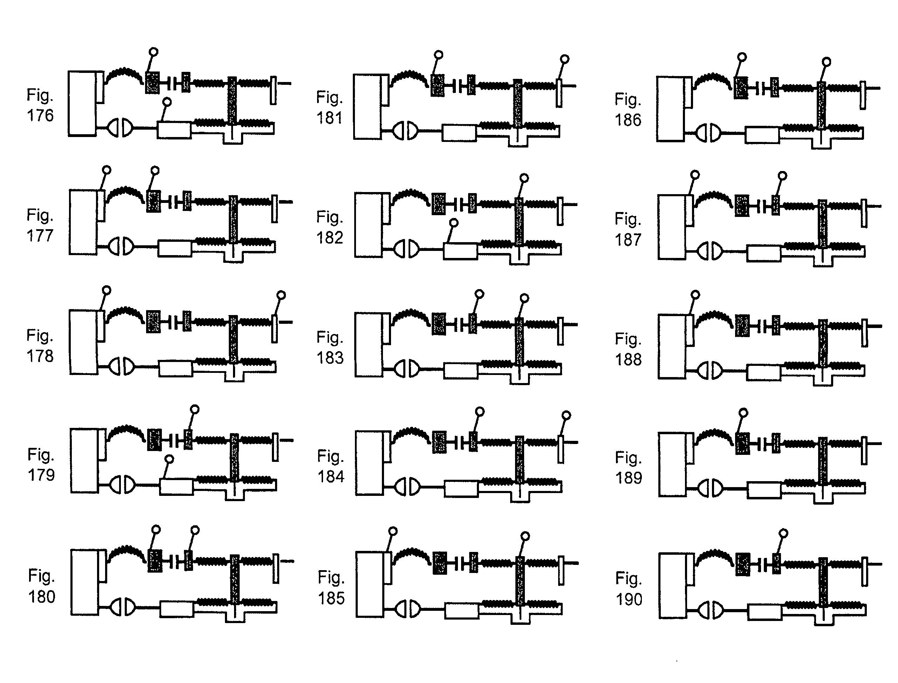

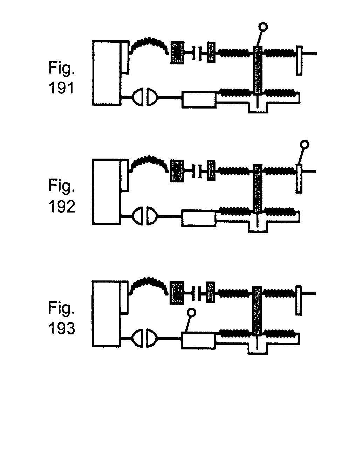

Die Figuren 8 bis 193 zeigen weitere Ausführungsformen des Drehmomentwandlers der Figuren 1 bis 7 in der Darstellung der funktionellen Diagramme der mit dem Buchstaben B versehenen Darstellungen der Figuren 1 bis 7.

Figur 1 zeigt eine erste Ausführungsform eines Drehmomentwandlers 100 zur Übertragung eines Drehmoments. Der Drehmomentwandler 100 ist insbesondere dazu eingerichtet, ein Drehmoment, das von einer Brennkraftmaschine, insbesondere einem Hubkolbenmotor, abgegeben wird, an ein Getriebe zu übertragen. Vorzugsweise sind der Motor, der Drehmomentwandler 100 und das Getriebe Teil eines Antriebstrangs eines Kraftfahrzeugs, bevorzugter Weise eines Personenkraftfahrzeugs.

Die im oberen Bereich dargestellte Figur 1A zeigt eine Schnittansicht der oberen Hälfte des Drehmomentwandlers100, während die im unteren Bereich dargestellte Figur 1B ein schematisches Kraftflussdiagramm des Drehmomentwandlers aus Figur 1A darstellt. Die Funktion des Drehmomentwandlers 100 wird erklärt, indem ein Drehmomentfluss jeweils von links nach rechts angenommen wird. Beim Betrieb etwa in einem Kraftfahrzeug entspricht dies der bevorzugten Richtung des Drehmomentflusses. Der umgekehrte Fluss kann sich jedoch auch einstellen, beispielsweise, wenn ein Schleppmoment des Antriebsmotors zur Verzögerung des Kraftfahrzeugs verwendet wird.

Eine Eingangsseite des Drehmomentwandlers 100 ist durch eine Eingangswelle 105 bzw. einen Mitnehmer 110 gebildet, über den Drehmoment in den Drehmomentwandler 100 eingekoppelt wird. Mit der Eingangswelle 105 bzw. mit dem Mitnehmer 110 starr verbunden ist eine erste Schwungmasse 115. Die erste Schwungmasse 115 kann beispielsweise ein Gusselement oder ein beispielsweise durch Tiefziehen, Prägen oder Falzen entsprechend geformtes Blech sein. Eine Bogenfeder 120 dient als Energiespeichersystem und koppelt die erste Schwungmasse 115 mechanisch mit einer zweiten Schwungmasse 125, wodurch ein Zwei-Massen-Schwungrad gebildet ist. Die Bogenfeder 120 ist entlang eines Umfangs um die Eingangswelle 105 gekrümmt. Aneinander gegenüberliegende Enden der Bogenfeder 120 sind mit der ersten Schwungmasse 115 bzw. mit der zweiten Schwungmasse 125 verbunden, sodass ein über die Eingangswelle 105 eingeleitetes Drehmoment eine Kraft bewirkt, die bestrebt ist, die Bogenfeder 120 zu komprimieren. Die Bogenfeder 120 ist an der zweiten Schwungmasse 115 abgestützt und dazu bestrebt, die zweite Schwungmasse 125 in Drehung zu versetzen.

In der dargestellten Ausführungsform ist die zweite Schwungmasse 125 durch ein Gehäuse 128 gebildet, das die im Folgenden beschriebene Teile des Drehmomentwandlers 100 umschließt und wenigstens teilweise mit einer Flüssigkeit, insbesondere Öl, gefüllt ist. In einer anderen Ausführungsform kann die zweite Schwungmasse 125 auch separat von dem Gehäuse 128 ausgeführt sein. Dabei kann die zweite Schwungmasse 125 innerhalb oder außerhalb des Gehäuses 128 liegen.

In der gezeigten Ausführungsform ist das Gehäuse 128 starr mit einem Pumpenrad 135 verbunden, dessen Masse somit zur zweiten Schwungmasse 125 gezählt werden kann. Durch die Flüssigkeit innerhalb des Gehäuses 128 kann ein Drehmoment vom Pumpenrad 135 auf ein Turbinenrad 140 übertragen werden. Zwischen dem Pumpenrad 135 und dem Turbinenrad 140 ist ein Leitrad 145 zur Herstellung vorbestimmter Strömungsverhältnisse angeordnet. Das Pumpenrad 135, das Turbinenrad 140 und das Leitrad 145 bilden eine Turbinenanordnung 150.

Das Leitrad 145 ist in Figur 1B nicht dargestellt. Die beidem Halbmonde zwischen dem Pumpenrad 135 und dem Turbinenrad 140 deuten eine hydrostatische bzw. hydrodynamische Kraftübertragung durch die Turbinenanordnung 150 an.

In Figur 1A ist in einem nabennahen Bereich des Turbinenrads 140 ein Flansch 155 angebracht. In einem Außenbereich des Flansches 155 ist ein Fliehkraftpendel 160 beweglich befestigt.

Eines oder mehrere Fliehkraftpendel 160 sind vorzugsweise gleichmäßig über einen Umfang des Flanschs 155 verteilt. Jedes Fliehkraftpendel 160 umfasst zwei Masseelemente, die sich bezüglich des Flanschs 155 gegenüber liegen. Die Masseelemente sind vorzugsweise deckungsgleich oder zueinander symmetrisch ausgebildet und mittels eines oder mehrerer Bolzen miteinander verbunden. Der Bolzen führt durch eine Aussparung im Flansch 155, wobei die Aussparung in der Drehebene länglich ist, so dass die Masseelemente des Fliehkraftpendels 160 nach Art einer Kulissenführung am Flansch 155 verschiebbar gelagert sind. In einer Ausführungsform kann zusätzlich eine Hülse oder ein anderer Wälzkörper als Rotationslager um den Bolzen angeordnet sein, um die Verschiebebewegung der Pendelmasse gegenüber der Flansch 155 zu erleichtern.

Das Fliehkraftpendel 160 kann je nach Anzahl der Bolzen und Form der korrespondierenden Aussparungen im Flansch 155 unifilar oder bifilar gelagert sein, so dass das Fliehkraftpendel 160 um einen Drehpunkt am Flansch 155 gedreht oder als Trapezpendel zusätzlich um eine eigene Achse verschwenkt werden kann, wenn eine Rotationsbeschleunigung oder - verzögerung auf den Flansch 155 wirkt. Die Form der Aussparungen am Flansch 155 ist für die jeweilige Bewegung geeignet ausgeformt. Durch die Bewegung des Fliehkraftpendels 160 werden Drehschwingungen des Flanschs 155 verringert bzw. getilgt.

In einer Ausführungsform kann eine der Aussparungen im Flansch 155 auch so geformt sein, dass in einem Abschnitt der möglichen Bewegung des Bolzens gegenüber dem Flansch 155 ein Spiel besteht, das eine weitere Verkippung des Fliehkraftpendels 160 erlaubt. Dadurch können beispielsweise Kollisionen zwischen benachbarten Fliehkraftpendein 160 vermieden werden.

Mit der zweiten Schwungmasse 125 bzw. dem Pumpenrad 135 der Turbinenanordnung 150 ist ein zweiter Flansch 165 fest verbunden. Obwohl die Masse des zweiten Flanschs 165 üblicherweise relativ klein ist, ist sie Teil der zweiten Schwungmasse 125. Zwischen dem ersten Flansch 155 und dem zweiten Flansch 165 ist eine Kupplungseinheit 170 angebracht. Die Kupplungseinheit 170 umfasst eine Anzahl Reibscheiben und Lamellen, die zum Übertragen vom Drehmoment zwischen den Flanschen 155 und 165 in axialer Richtung aneinander gepresst werden können. In der dargestellten Ausführungsform liegt die Kupplungseinrichtung 170 innerhalb des Gehäuses 128 und kann von der Flüssigkeit umspült werden; es handelt sich somit um eine Nasskupplung. In einer anderen Ausführungsform kann die Kupplungseinheit 170 auch außerhalb des Gehäuses 128 liegen und die Kupplungseinheit 170 kann eine Trockenkupplung sein.

Das Turbinenrad 140 und die mit ihm fest verbundenen Elemente können mittels eines ersten Drehmomentflusses, der durch die Turbinenanordnung 150 verläuft, und/oder mittels eines zweiten Drehmomentflusses, der durch die Kupplungseinheit 170 verläuft, angetrieben werden. Üblicherweise wird die Kupplungseinheit 170 geöffnet, wenn das Turbinenrad 140 gegenüber dem Gehäuse 128 langsam läuft oder still steht. Besteht eine ausreichend große Drehzahldifferenz zwischen dem Turbinenrad 140 und dem Pumpenrad 135, das durch die Antriebswelle 105 antreibbar ist, so wird ein Drehmoment durch die Turbinenanordnung 150 übermittelt. Zur Vermeidung von Wandlungsverlusten innerhalb der Turbinenanordnung 150 kann die Kupplungseinheit 170 geschlossen werden. Dies erfolgt üblicherweise dann, wenn das Turbinenrad 140 eine ausreichend hohe Drehgeschwindigkeit gegenüber dem Gehäuse 128 erreicht hat.

Von dem Turbinenrad 140 wird das übermittelte Drehmoment mittels einer Druckfeder 175 ausgekoppelt und an einen dritten Flansch 180 weitergeleitet, der mit der Ausgangswelle 185 verbunden ist. Dabei liegt die Druckfeder 175 mit ihren Enden bündig in zwei Fenstern, die im dritten Flansch 180 und einem weiteren Flansch, der mit dem ersten Flansch 155 verbunden ist, vorgesehen sind. So können der erste Flansch 115 und der dritte Flansch 180 vorwärts oder rückwärts um die Drehachse des Drehmomentwandlers 100 gegeneinander verdreht werden, wobei jeweils die Druckfeder 175 komprimiert wird. Die Druckfeder 175 wirkt dabei als ein weiteres Energiespeichersystem. Im Bereich der Fenster sind die Flansche jeweils so ausgeformt, dass die Druckfeder 175 in axialer Richtung abgestützt ist.

In Figur 1A ist die Ausgangswelle 185 eine Hohlwelle, die eine Ausgangsseite des Drehmomentwandlers 100 bildet. In anderen Ausführungsformen kann auch eine massive Welle oder ein entsprechender Flansch oder Mitnehmer zu diesem Zweck vorgesehen sein.

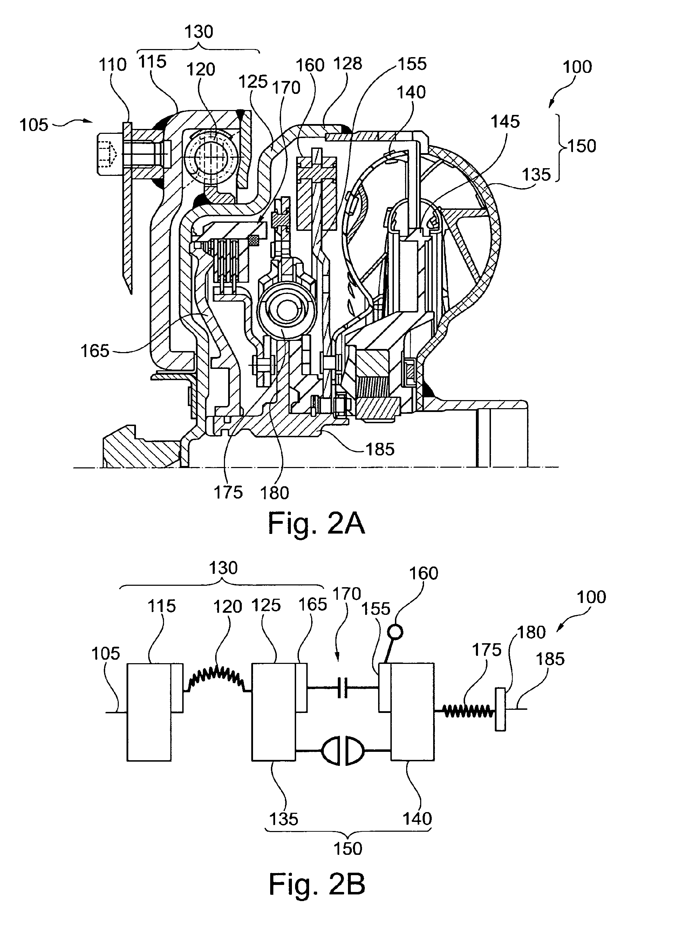

Figur 2 zeigt eine weitere Ausführungsform des Drehmomentwandlers 100 aus Figur 1. Die dargestellte Ausführungsform unterscheidet sich im Wesentlichen durch die Ausformung der ersten Schwungmasse 115 von der in Figur 1 dargestellten Ausführungsform. Die Prinzipdarstellung in Figur 2B entspricht der von Figur 1B.

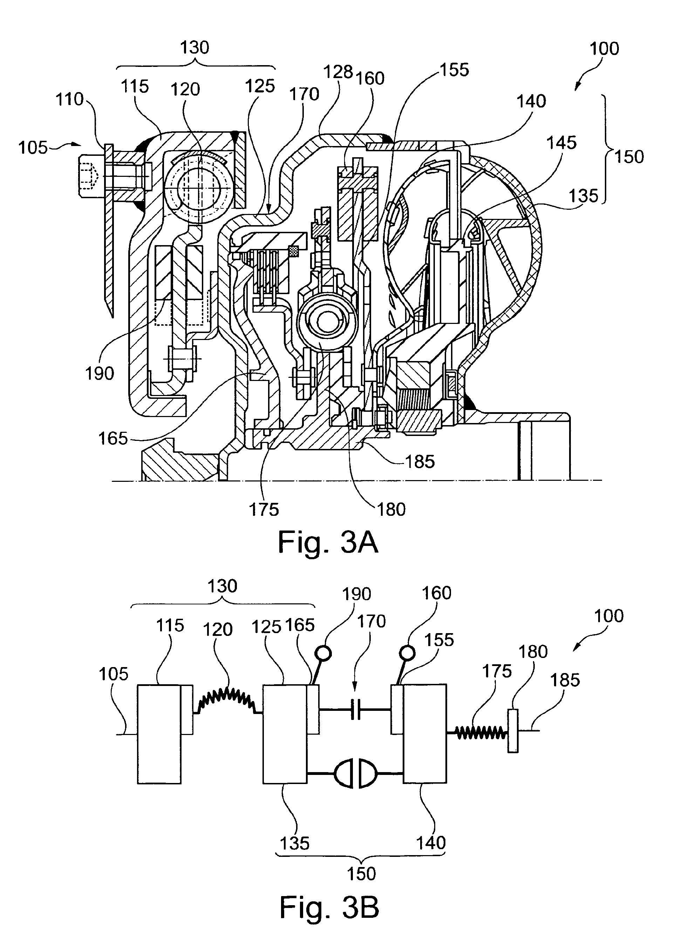

Figur 3 zeigt noch eine weitere Ausführungsform des Drehmomentwandlers 100. Im Unterschied zu dem in den Figuren 1 und 2 dargestellten Ausführungsformen ist ein zweites Fliehkraftpendel 190 mit der zweiten Schwungmasse 125 verbunden. Die zweite Schwungmasse 190 ist außerhalb des Gehäuses 128 angeordnet und läuft somit trocken; in einer anderen Ausführungsform kann das zweite Fliehkraftpendel 190 jedoch auch innerhalb des Gehäuses 128 angeordnet sein.

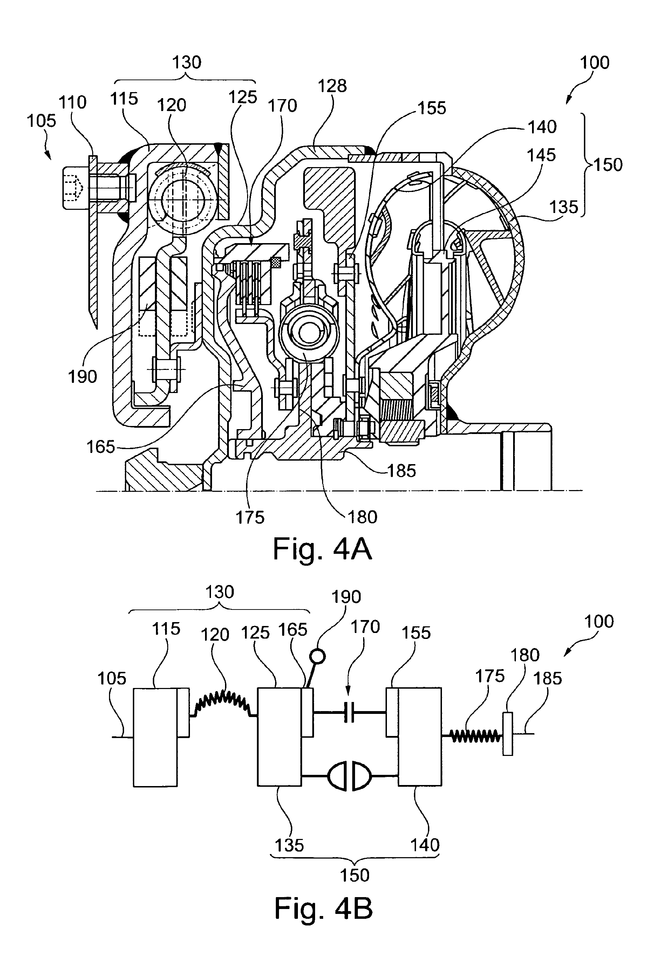

Figur 4 zeigt eine weitere Ausführungsform des Drehmomentwandlers 100, welcher der Ausführungsform von Figur 3 entspricht, mit dem Unterschied, dass das erste Fliehkraftpendel 160 entfällt. Der entsprechende Bauraum wird durch ein Masseelement ersetzt, das am ersten Flansch 155 ausgebildet ist.

Zur Tilgung von Drehschwingungen wird bei einer Drehbeschleunigung das Masseelement gegenüber der Kupplungseinheit 170 rotatorisch ausgelenkt, wobei die Druckfeder 175 komprimiert wird. Bei Abklingen der Drehbeschleunigung stellt die Druckfeder 175 das Masseelement bezüglich der Kupplungseinheit 170 wieder zurück, wodurch die im Masseelement bzw. in der Druckfeder 175 gespeicherte Energie in eine Drehbewegung zurückgewandelt wird. Dadurch kann eine Verringerung der Amplitude der Drehschwingungen erreicht werden.

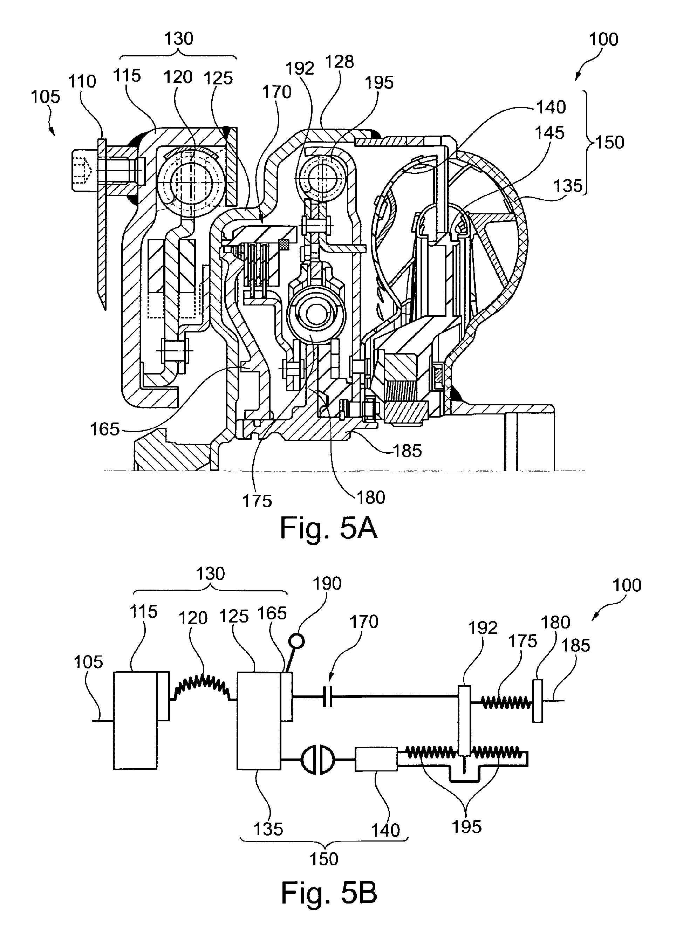

Figur 5 zeigt eine weitere Ausführungsform des Drehmomentwandlers 100 der Figuren 1 bis 4. Wie in der Ausführungsform von Figur 4 ist das an der zweiten Schwungmasse 135 befestigte zweite Fliehkraftpendel 190 vorgesehen, während die Turbine 140 kein Fliehkraftpendel trägt. Im Unterschied zu Figur 4 ist an einem dritten Flansch 192, das Drehmoment zwischen der Kupplungseinheit 170 und der Druckfeder 175 übermittelt, mittels einer Doppelfeder 195 das Turbinenrad 140 der Turbinenanordnung 150 angebunden. Dadurch kann die Schwungmasse des Turbinenrads 140 als federnd angekoppelte Dämpfungsmasse verwendet werden. Eine solche Anordnung wird auch Turbinentilger genannt. Die Doppelfeder 195 kann ein System aus mehreren Federn, insbesondere mehreren auf Druck beanspruchbaren Bogenfedern, umfassen, die es dem Turbinenrad 140 erlauben, bezüglich dem dritten Flansch 192 in beide Drehrichtungen ausgelenkt zu werden. In einer anderen Ausführungsform kann die Doppelfeder 195 auch ein System aus einer Zug- und einer Druckfeder oder einer kombinierten Zug-Druckfeder umfassen.

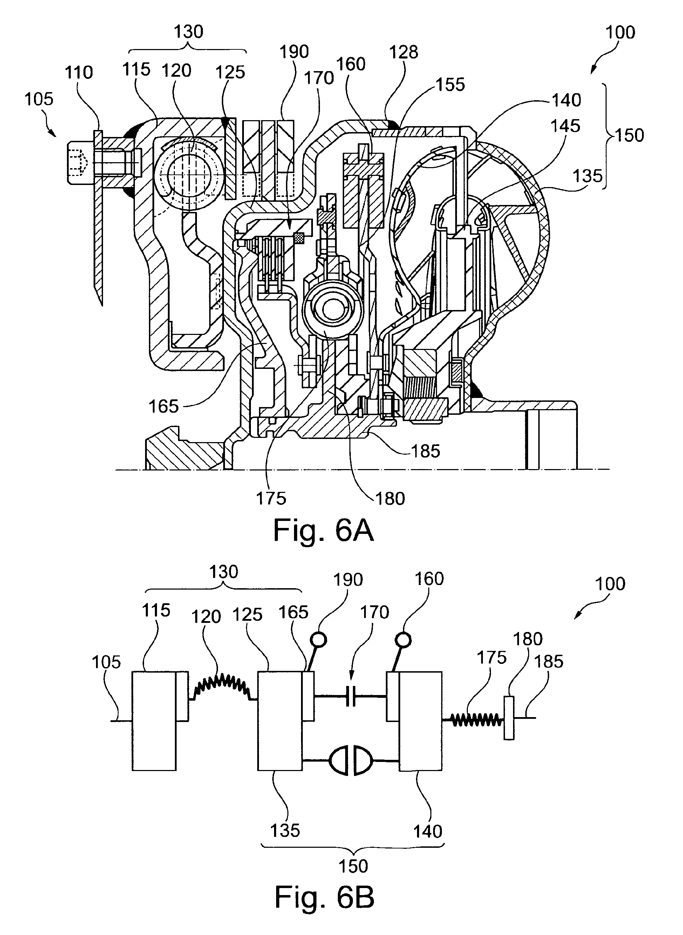

Figur 6 zeigt eine weitere Ausführungsform des Drehmomentwandlers 100 der Figuren 1 bis 5. Die dargestellte Ausführungsform entspricht im Wesentlichen der Ausführungsform von Figur 3, mit dem Unterschied, dass das zweite Fliehkraftpendel 190 auf der Außenseite des Gehäuses 128 trocken angebracht ist.

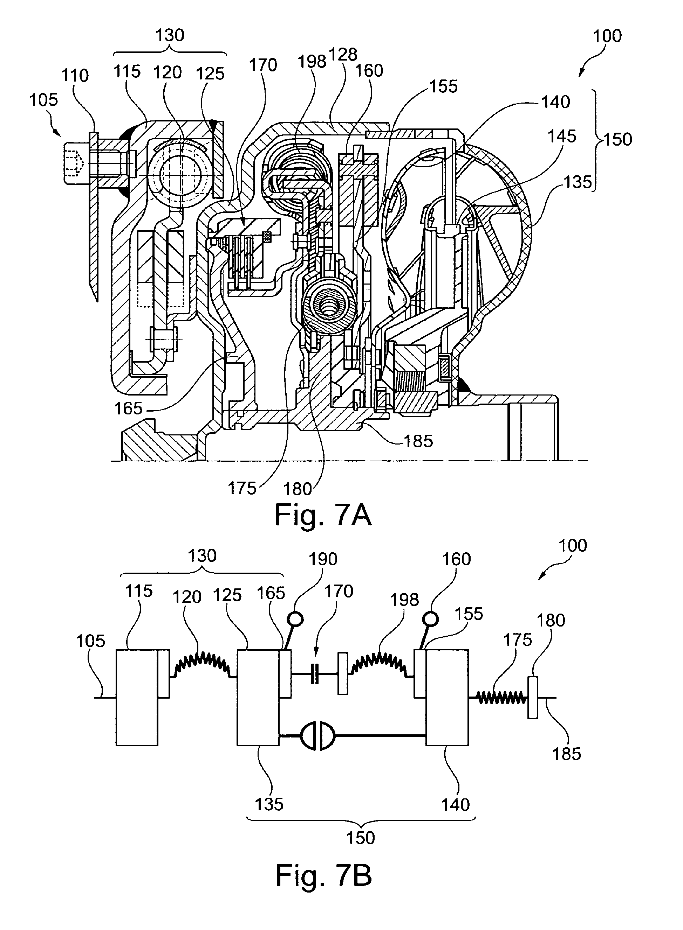

Figur 7 zeigt noch eine weitere Ausführungsform des Drehmomentwandlers 100 der Figuren 1 bis 6. Die gezeigte Ausführungsform entspricht der von Figur 3, mit dem Unterschied, dass eine zusätzliche Bogenfeder 198 vorgesehen ist, um die Kupplungseinheit 170 mit dem Turbinenrad 140 zu koppeln.

Die Figuren 8 bis 193 verwenden die Darstellung der Prinzipbilder der Figuren 1B bis 7B. Die Symbole und Bezugszeichen dieser Prinzipbilder werden auch in den Figuren 8 bis 193 verwendet, wobei einzelne Elemente auch mehrfach vorgesehen sein können. In diesem Fall wird in der folgenden Beschreibung ein Bezugszeichen mit einem durch einen Punkt abgesetzten numerischen Suffix verwendet, wobei der Suffix die jeweilige Instanz des Elements kennzeichnet, beispielsweise eine erste Schwungmasse 115.1, eine zweite Schwungmasse 115.2 und so weiter.

Figuren 8 bis 88 zeigen Ausführungsformen des Drehmomentwandlers 100, bei denen der Drehmomentfluss von der Eingangswelle 105 mittels des Zwei-Massen-Schwungrades 130 an das Pumpenrad 135 der Turbinenanordnung 150 übermittelt wird.

Das Zwei-Massen-Schwungrad 130 umfasst eine erste Schwungmasse 115.1 und eine zweite Schwungmasse 105.2, die mittels der Bogenfeder 120 miteinander gekoppelt sind. Die Übertragung des Drehmoments vom Turbinenrad 140 zur Ausgangswelle 185 erfolgt mittels der Druckfeder 175.

Figuren 23 bis 53 zeigen Ausführungsformen des Drehmomentwandlers 100, in denen zusätzlich zu den in den Figuren 143 bis 157 gezeigten Ausführungsformen die zweite Bogenfeder 120.2 zum Übermitteln des Drehmomentflusses von der Kupplungseinheit 170 an das Turbinenrad 140 vorgesehen ist.

In den Figuren 54 bis 84 sind Ausführungsformen des Drehmomentwandlers 100 dargestellt, in denen im Unterschied zu den in den Figuren 158 bis 188 dargestellten Ausführungsformen die Bogenfeder 120 zum Einkoppeln des Drehmoments an das Turbinenrad 140 als Parallelanordnung zweier Bogenfedern 120 ausgeführt ist.

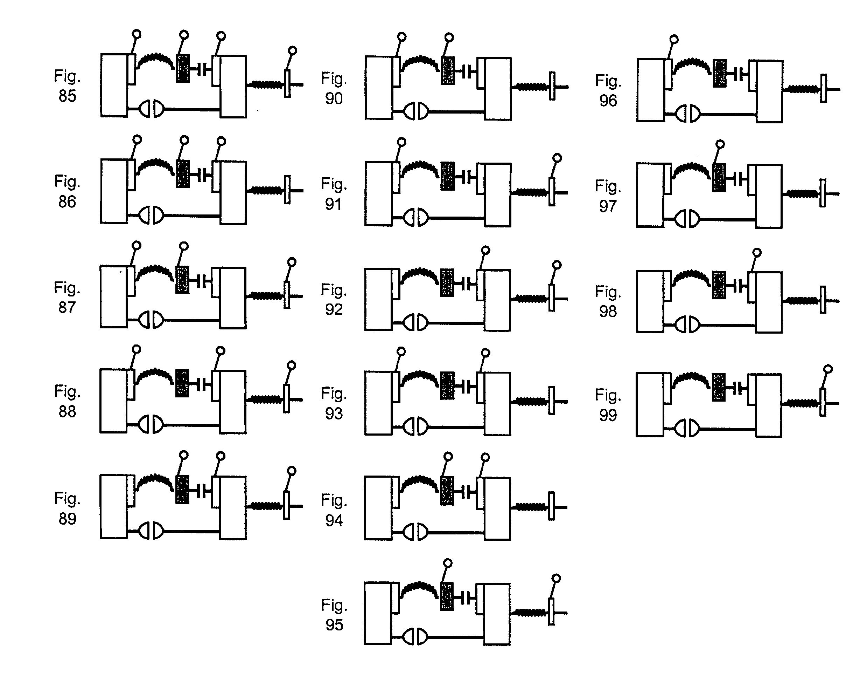

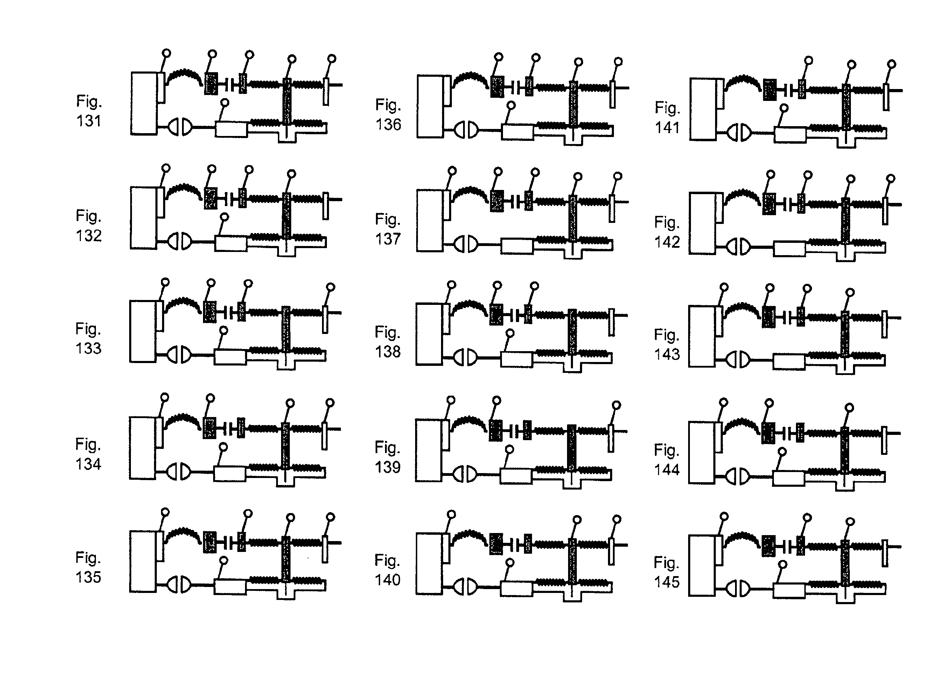

In den Figuren 85 bis 99 sind Drehmomentwandler 100 dargestellt, die auf dem Prinzip des Zwei-Massen-Wandlers basieren. Hierfür wird ein Zwei-Massen-Schwungrad 130, wie es oben mit Bezug auf die Figuren 143 bis 157 beschrieben wurde, dadurch gebildet, dass das Pumpenrad 135 der Turbinenanordnung 150 als Primärmasse fungiert, die mittels der Bogenfeder 120 mit einer im Drehmomentfluss von der Eingangswelle 105 zur Ausgangsseite 185 liegenden Sekundär-Schwungmasse 115 gekoppelt ist. An den meisten dargestellten Ausführungsformen des Drehmomentwandlers 100 sind drei oder mehr Fliehkraftpendel 160 vorgesehen.

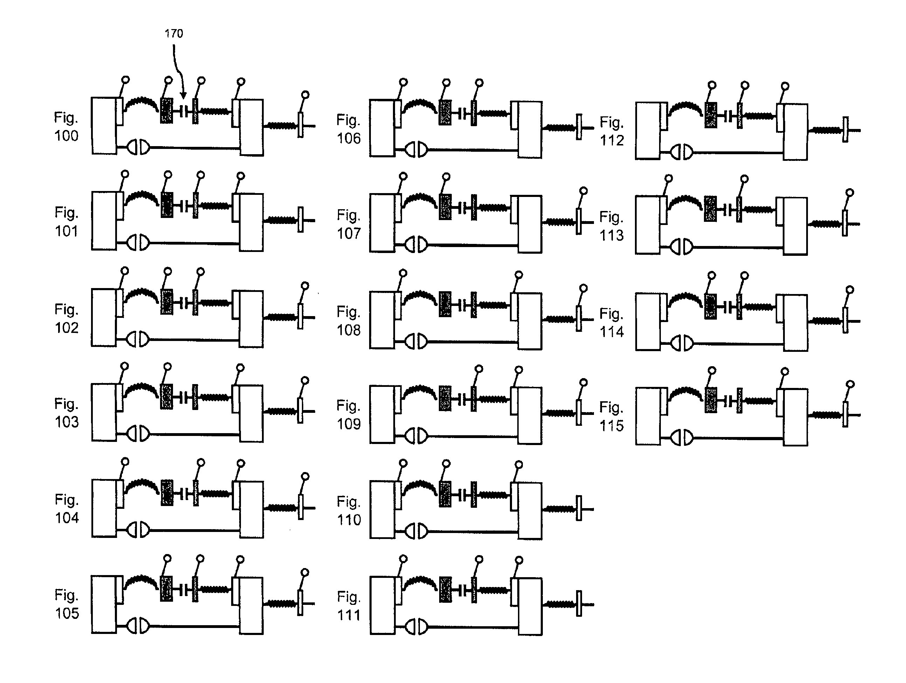

Weitere Ausführungsformen des Drehmomentwandlers 100 zeigen die Figuren 100 bis 130. In diesen Ausführungsformen ist ein Zwei-Massen-Wandler, wie er oben mit Bezug auf die Figuren 220 bis 234 beschrieben wurde, mit der Kupplungseinheit 170 verbunden, die das Drehmoment mittels einer Druckfeder 175 in das Turbinenrad 140 der Turbinenanordnung 150 einleitet, von wo aus das Drehmoment mittels einer zweiten Druckfeder 175 in Richtung der Ausgangsseite 120 ausgekoppelt wird.

In den Figuren 131 bis 193 sind Varianten des Drehmomentwandlers 100 dargestellt, die den Zwei-Massen-Wandler der Figuren 220 bis 234 mit einem Turbinentilger kombinieren. Beim Turbinentilger ist das Turbinenrad 140 mittels der Druckfedern 175 an die erste Schwungmasse 115.1 gekoppelt.

### Bezugszeichenliste

- 100: Drehmomentwandler
- 105: Eingangswelle (Eingangsseite)
- 110: Mitnehmer
- 115: erste Schwungmasse
- 120: Bogenfeder
- 125: zweite Schwungmasse
- 128: Gehäuse
- 130: Zwei-Massen-Schwungrad
- 135: Pumpenrad
- 140: Turbinenrad
- 145: Leitrad
- 150: Turbinenanordnung
- 155: erster Flansch
- 160: Fliehkraftpendel
- 165: zweiter Flansch
- 170: Kupplungseinheit
- 175: Druckfeder
- 180: dritter Flansch
- 185: Ausgangswelle (Ausgangsseite)
- 190: Fliehkraftpendel
- 192: dritter Flansch
- 195: Doppelfeder
- 198: Bogenfeder

## Patentansprüche

1. Drehmomentwandler (100) zur Übertragung von Drehmoment zwischen einer Eingangsseite (105) und einer Ausgangsseite (185), wobei der Drehmomentwandler (100) folgende Elemente umfasst:
- ein Zwei-Massen-Schwungrad mit einer ersten drehbaren Schwungmasse (115) und einer zweiten drehbaren Schwungmasse (125), die mittels eines Energiespeichersystems (120) miteinander verbunden sind;
- ein mit der Ausgangsseite (185) verbundenes weiteres Energiespeichersystem (175);
- eine Turbinenanordnung (150) und eine Kupplungseinheit (170), die zueinander parallel geschaltet sind;
- ein Fliehkraftpendel (160) zur Tilgung von Torsionsschwingungen.

2. Drehmomentwandler (100) nach Anspruch 1, wobei das Zwei-Massen-Schwungrad (115, 120, 125) zwischen der Eingangsseite (105) und der Turbinenanordnung (150) bzw. der Kupplungseinheit (170) angeordnet ist.

3. Drehmomentwandler (100) nach Anspruch 1, wobei das Zwei-Massen-Schwungrad (115, 120, 125) parallel zur Turbinenanordnung (150) bzw. der Kupplungseinheit (170) angeordnet ist.

4. Drehmomentwandler (100) nach einem der vorangehenden Ansprüche, wobei ein erstes drehbares Element (192) und ein zweites, dazu koaxial drehbares Element (140) vorgesehen sind, wobei das erste Element (192) dazu eingerichtet ist, Drehmoment zwischen der Eingangsseite (105) und der Ausgangsseite (185) zu übermitteln und das zweite Element (140) mit dem ersten Element (192) elastisch drehbar gekoppelt ist.

5. Drehmomentwandler (100) nach einem der vorangehenden Ansprüche, wobei ein weiteres Fliehkraftpendel (190) an einem drehbaren Element (105, 140, 155, 195), das mit einer Drehbewegung der Eingangsseite (105) oder der Ausgangsseite (185) gekoppelt ist, angebracht ist.

6. Drehmomentwandler (100) nach einem der vorangehenden Ansprüche, wobei mindestens einer der Energiespeicher (120, 175, 195, 198) mehrere um einen Umfang um die Richtung des Drehmoments verteilte Federn umfasst.

7. Drehmomentwandler (100) nach einem der vorangehenden Ansprüche, wobei ein Energiespeicher (120, 175, 195, 198) oder wenigstens zwei Energiespeicher (120, 175, 195, 198) jeweils mehrere Federn umfassen, die so angeordnet sind, dass eine Federkennlinie des Energiespeichers zwei oder mehrere unterschiedliche Abschnitte umfasst.

8. Drehmomentwandler (100) nach einem der vorangehenden Ansprüche, wobei einer der Energiespeicher (120, 175, 195, 198) eine Anordnung zweier paralleler Federn umfasst.

9. Drehmomentwandler (100) nach einem der vorangehenden Ansprüche, wobei einer der Energiespeicher (120, 175, 195, 198) eine Anordnung zweier in Serie angeordneter Federn umfasst, zwischen denen eine weitere Schwungmasse (140, 155) angeordnet ist.

10. Drehmomentwandler (100) nach einem der vorangehenden Ansprüche, wobei die Energiespeicher an gleichen oder unterschiedlichen Wirkradien um die Richtung des Drehmoments liegen.

11. Drehmomentwandler (100) nach einem der vorangehenden Ansprüche, wobei eine der Federn eine Druckfeder (175) oder eine Bogenfeder (120) ist.

12. Drehmomentwandler (100) nach einem der vorangehenden Ansprüche, wobei eine Eigenfrequenz des Fliehkraftpendels (160, 190) einer Torsionsschwingung einer vorbestimmten Ordnung der Eingangsseite (105) entspricht.

13. Drehmomentwandler (100) nach einem der vorangehenden Ansprüche, wobei mindestens eines der energiespeichernden Federsysteme (120, 175, 195, 198) dazu eingerichtet ist, nicht mehr als um einen vorbestimmten Winkel verdreht zu werden.

14. Drehmomentwandler (100) nach einem der vorangehenden Ansprüche, wobei eines der energiespeichernden Federsysteme (120, 175, 195, 198) mindestens ein Reibelement zur Erzeugung einer vorbestimmten Reibung umfasst.
